(19) Europäisches Patentamt
European Patent Office
Office européen des brevets

(11) **EP 4 496 035 A1**

(12) **EUROPEAN PATENT APPLICATION**
published in accordance with Art. 153(4) EPC

(43) Date of publication:
**22.01.2025 Bulletin 2025/04**

(21) Application number: **23779867.3**

(22) Date of filing: **20.03.2023**

(51) International Patent Classification (IPC):
**H01M 4/58** (2010.01)    **H01M 4/36** (2006.01)

(52) Cooperative Patent Classification (CPC):
**C01B 32/05; H01M 4/36; H01M 4/38; H01M 4/58;**
**Y02E 60/10**

(86) International application number:
**PCT/JP2023/010989**

(87) International publication number:
**WO 2023/189851 (05.10.2023 Gazette 2023/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **31.03.2022 JP 2022061321**

(71) Applicant: **SUMITOMO RUBBER INDUSTRIES,**
**LTD.**
**Kobe-shi, Hyogo 651-0072 (JP)**

(72) Inventors:
• **KUBO, Tatsuya**
  **Kobe-shi, Hyogo 651-0072 (JP)**
• **CHUJO, Fumiya**
  **Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(54) **SULFUR-BASED ACTIVE MATERIAL, ELECTRODE, AND LITHIUM ION SECONDARY BATTERY**

(57)    It is an object of the present invention to provide a novel sulfur-based active material that can improve in cycle characteristics, an electrode comprising the sulfur-based active material, that is, a positive electrode or a negative electrode, and a lithium-ion secondary battery comprising the electrode. Provided is a sulfur-based active material obtained by baking a mixture comprising an acryl-based monomer and sulfur, wherein a boiling point of the acryl-based monomer is 230°C or higher.

EP 4 496 035 A1

**Description**

TECHNICAL FIELD

The present invention relates to a sulfur-based active material, an electrode, and a lithium-ion secondary battery.

BACKGROUND ART

The lithium-ion secondary battery has been mainly used as a battery for portable electronic device because of its large charge and discharge capacity. In addition, the lithium-ion secondary battery has been used more and more as a battery for electric vehicle as well, and expected to have improved performance.

Patent Document 1 describes a positive electrode active material for lithium-ion secondary battery, which is obtained by heating a base powder comprising a sulfur powder and a polyacrylonitrile powder under a non-oxidizing atmosphere. Moreover, Patent Document 2 aims to provide a positive electrode active material at a low cost by using an industrial rubber.

On the other hand, as negative electrode active materials, it has been proposed to use materials that can absorb and release more lithium ions, such as silicon (Si), tin (Sn), and the like in order to increase battery capacity of lithium-ion secondary battery.

PRIOR ART DOCUMENT

Patent Document

Patent Document 1: WO 2010/044437
Patent Document 2: JP 2015-92449 A

SUMMARY OF THE INVENTION

PROBLEM TO BE SOLVED BY THE INVENTION

However, polyacrylonitrile is originally expensive, and in addition, its quality (particularly its particle size) affects a battery performance such as charge and discharge capacity, cycle characteristics, and the like. Therefore, there was a problem that the cost further increased when attempting to obtain polyacrylonitrile of constant quality. Moreover, although the industrial rubber is inexpensive, there was an issue for improvement in cycle characteristics. The above-described materials that have been proposed as the negative electrode active materials undergo a large change in volume by absorption and release of lithium ions, and thus they have a problem of poor cycle characteristics when charging and discharging are repeated. Although carbon materials such as graphite, hard carbon, and the like are also used, their capacity have almost reached their theoretical limit and it cannot be expected to increase their capacity significantly.

From the viewpoint of material synthesis, in reactions using only solid raw materials of polyacrylonitrile, a rubber, and sulfur, diffusion of substances is slower compared with a liquid system and a gas system, and therefore reaction progress tends to be slower compared with these liquid and gas systems. In order to efficiently make reaction to progress, it is preferable to adopt a method of such as liquefying or vaporizing a solid raw material or to use a liquid or gas raw material. However, liquefying or vaporizing the solid raw material requires a considerably high temperature, which is therefore disadvantageous from the viewpoints of production cost and process. On the other hand, in a case of a raw material that vaporizes quickly, there is a problem that it is discharged to the outside of the system before being involved in the reaction.

MEANS TO SOLVE THE PROBLEM

That is, the present invention relates to:
A sulfur-based active material obtained by baking a mixture comprising an acryl-based monomer and sulfur, wherein a boiling point of the acryl-based monomer is 230°C or higher.

EFFECT OF THE INVENTION

According to the present invention, a novel sulfur-based active material having an excellent cycle characteristics, an electrode comprising the sulfur-based active material, that is, a positive electrode or a negative electrode, and a lithium-ion secondary battery comprising the electrode can be provided.

**In the present specification, the term "cycle characteristics" refers to** characteristics in which charge and discharge capacity of a secondary battery is maintained despite repeated charging/discharging. Therefore, as charging and discharging are repeated, a secondary battery with a high degree of decrease in charge and discharge capacity and a low capacity retention rate has poor cycle characteristics, while, on the contrary, a secondary battery with a low degree of decrease in charge and discharge capacity and a high capacity retention rate has excellent cycle characteristics.

BRIEF DESCRIPTION OF THE DRAWINGS

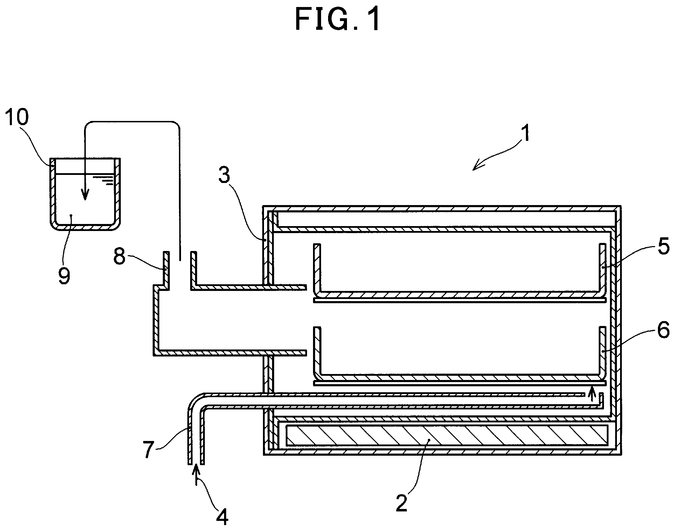

FIG. 1 is a cross-sectional view schematically showing a reaction device used for producing a sulfur-based active material in Examples of the present invention.

EMBODIMENT FOR CARRYING OUT THE INVENTION

The present invention will be described in detail as follows. **Besides, numerical values of upper limits and lower limits relating to "or more", "or less", "greater than", "less than", etc. for descriptions of numerical ranges are** numerical values that can be arbitrarily combined, and numerical values in Examples can also be these upper limits and/or the lower limits. Moreover, a numerical range shown to include lower limits or upper limits is interpreted as simultaneously disclosing a numerical range not including the lower limits or the upper limits, unless contrary to the purpose of the present invention, and conversely, a numerical range shown not to include lower limits or upper limits is interpreted as simultaneously disclosing a numerical range including the lower limits or the upper limits, unless contrary to the purpose of the present invention.

One embodiment of the present invention is a sulfur-based active material obtained by baking a mixture comprising an acryl-based monomer and sulfur, wherein a boiling point of the acryl-based monomer is 230°C or higher.

Another embodiment of the present invention is an electrode comprising the sulfur-based active material.

Another embodiment of the present invention is a lithium-ion secondary battery comprising the electrode.

Another embodiment of the present invention is a method of producing a sulfur-based active material, the method comprising the steps of:

(1) preparing a raw material by mixing an acryl-based monomer and sulfur; and
(2) baking the raw material,

wherein a boiling point of the acryl-based monomer is 230°C or higher.

Another embodiment of the present invention is a method of producing an electrode, the method comprising, after producing a sulfur-based active material by the method of producing a sulfur-based active material, the step of:
(3) producing an electrode using the sulfur-based active material by a conventional method.

Another embodiment of the present invention is a method of producing a lithium-ion secondary battery, the method comprising, after producing an electrode by the method of producing an electrode, the step of:
(4) producing a lithium-ion secondary battery using the electrode by a conventional method.

The baking temperature is preferably higher than 250°C and lower than 500°C.

The baking is preferably performed under a non-oxidizing atmosphere.

The acryl-based monomer is preferably at least one selected from the group consisting of an acrylate compound represented by the following formula (1) and a diacrylate compound represented by the following formula (2):

$$CH_2=C(R^{11})COOR^{12} \qquad (1)$$

(wherein, $R^{11}$ is a hydrogen atom or a methyl group, and $R^{12}$ is an alkyl group.)

$$CH_2=C(R^{21})COO\text{-}Y\text{-}OCO(R^{22})C=CH_2 \qquad (2)$$

(wherein $R^{21}$ and $R^{22}$ are the same or different and are each a hydrogen atom or a methyl group, Y is a linear hydrocarbylene group, which may have at least one substituent selected from the group consisting of a hydroxyl group and an alkyl group, and a carbon skeleton constituting the linear hydrocarbylene group may have an ether bond with an oxygen atom provided that when there are two or more of the ether bonds, any adjacent oxygen atoms always have two or more intervening carbon atoms between them.)

It is preferable that $R^{12}$ is an alkyl group having 12 to 30 carbon atoms, Y is a linear hydrocarbylene group having 2 to 6 carbon atoms, and in the linear hydrocarbylene group, the number of substituents is 1 to 4, the number of carbon atoms of the alkyl group that is a substituent is 1 to 4, and the number of ether bonds which the carbon skeleton constituting the linear hydrocarbylene group has is 1 to 2.

The acryl-based monomer is preferably a liquid.

A sulfur content in the sulfur-based active material is preferably 55.0% by mass or more.

An amount of the sulfur based on the acryl-based monomer is preferably 50 parts by mass or more and 1000 parts by mass or less based on 100 parts by mass of the acryl-based monomer.

<Acryl-based monomer>

In the present invention, the acryl-based monomer is not particularly limited as long as it is a monomer having an acrylic group and has a boiling point of 230°C or higher. Examples of such acryl-based monomer include, for example, an acrylate compound represented by the following formula (1), a diacrylate compound represented by the following formula (2), and the like.

The acryl-based monomer is preferably at least one selected from the group consisting of an acrylate compound represented by the following formula (1) and a diacrylate compound represented by the following formula (2):

$$CH_2=C(R^{11})COOR^{12} \qquad (1)$$

(wherein, $R^{11}$ is a hydrogen atom or a methyl group, and $R^{12}$ is an alkyl group.)

$$CH_2=C(R^{21})COO-Y-OCO(R^{22})C=CH_2 \qquad (2)$$

(wherein $R^{21}$ and $R^{22}$ are the same or different and are each a hydrogen atom or a methyl group, Y is a linear hydrocarbylene group, which may have at least one substituent selected from the group consisting of a hydroxyl group and an alkyl group, and a carbon skeleton constituting the linear hydrocarbylene group may have an ether bond with an oxygen atom provided that when there are two or more of the ether bonds, any adjacent oxygen atoms always have two or more intervening carbon atoms between them.)

In the formula (1), $R^{11}$ is preferably a methyl group, and $R^{12}$ is preferably an alkyl group having 12 or more carbon atoms, where the alkyl group includes both a linear alkyl group and a branched alkyl group. Examples of the alkyl group of $R^{12}$ include a dodecyl group (C12), a stearyl group (C18), a triacontyl group (C30), and the like. Examples of the compound represented by the formula (1) include, for example, dodecyl (meth)acrylate, stearyl (meth)acrylate, triacontyl (meth) acrylate, and the like, and more preferably include dodecyl methacrylate and stearyl methacrylate. Here, "(meth)acrylate" of methyl (meth)acrylate and butyl (meth)acrylate represents either "acrylate" or "methacrylate" (the same shall apply hereinafter).

In the formula (2), both $R^{21}$ and $R^{22}$ are preferably methyl groups. The number of carbon atoms in the linear hydrocarbylene group of Y is preferably 2 to 6, more preferably 2 or 3. The number of substituents in Y is preferably 1 to 4, more preferably 1 or 2. As the substituents in Y, one or more substituents selected from the group consisting of a hydroxyl group and an alkyl group having 1 to 4 carbon atoms are preferable, and as the alkyl group having 1 to 4 carbon atoms, a methyl group is preferable. When the carbon skeleton of Y has an ether bond formed by an oxygen atom, for example, a moiety corresponding to -Y-O- is preferably represented by the following formula (3) (provided that no substituent in Y is considered in the formula (3)):

$$-(CH_2)_l-(CH_2CH_2O)_m-(CH_2CH_2CH_2O)_n- \qquad (3)$$

(wherein l is 0 to 6, m is 0 to 3, and n is 0 to 2. However, l, m, and n cannot be 0 at the same time.)

In the formula (3), it is preferable that l is 1, 2, 3, 4, 5, or 6, and m and n are 0; m is 1, 2, or 3, and l and n are 0; or n is 1 or 2 and l and m are 0.

Examples of the compound represented by the formula (2) include, for example, ethylene glycol di(meth) acrylate, diethylene glycol di(meth)acrylate, triethylene glycol di(meth)acrylate, 1,6-hexanediol di(meth)acrylate, neopentine glycol di(meth)acrylate, glycerin di(meth)acrylate, and the like. Among them, ethylene glycol dimethacrylate is preferable.

The acryl-based monomer can be used alone, or two or more thereof can be used in combination.

(Boiling point of acryl-based monomer)

The boiling point of the acryl-based monomer is 230°C or higher. When the boiling point of the acryl-based monomer is lower than 230°C, it will vaporize quickly as the temperature rises during baking, and therefore it will be discharged to the outside of the system, so that a reaction with sulfur does not progress sufficiently. The boiling point of the acryl-based monomer is preferably higher than 230°C, more preferably higher than 235°C, further preferably higher than 250°C, further preferably higher than 270°C, further preferably higher than 300°C, further preferably 320°C or higher, further preferably higher than 350°C. On the other hand, an upper limit of the boiling point of the acryl-based monomer is not particularly limited. Besides, as will be mentioned later, it is preferable for the acryl-based monomer to have a liquid property at a normal temperature from the viewpoints of diffusing to and mixing with sulfur, so that it can be said that, from this viewpoint, it is preferable that the boiling point is a predetermined value or less. The boiling point of the acryl-based monomer is, for example, preferably lower than 400°C, more preferably lower than 395°C, further preferably lower than 390°C, further preferably lower than 385°C, further preferably 380°C or lower.

(Property of acryl-based monomer)

The acryl-based monomer is preferably liquid at a normal temperature (e.g., 20°C). This is because it tends to make diffusing to and mixing with sulfur easy.

(Obtaining or producing acryl-based monomer)

The acryl-based monomer is commercially available or can be produced by a conventional method within the purview of knowledge of those skilled in the art. Examples of the commercially available acryl-based monomer include, for example, those manufactured by Tokyo Chemical Industry Co., Ltd., those manufactured by Sekisui Kasei Co., Ltd., and the like.

<Sulfur>

As sulfur, any of those in various forms such as a powdered sulfur, an insoluble sulfur, a precipitated sulfur, a colloidal sulfur, and the like can be used. Among them, a precipitated sulfur and a colloidal sulfur are preferable. A compounding amount of sulfur is preferably 50 parts by mass or more, more preferably greater than 100 parts by mass, further preferably greater than 150 parts by mass, further preferably greater than 200 parts by mass, further preferably greater than 250 parts by mass, based on 100 parts by mass of the acryl-based monomer. When it is 50 parts by mass or more, there is a tendency that charge and discharge capacity and cycle characteristics can be improved. On the other hand, there is no particular upper limit of the compounding amount of sulfur, but the amount is usually 1,000 parts by mass or less, preferably less than 750 parts by mass, more preferably less than 500 parts by mass. When it is 1000 parts by mass or less, there is a tendency to be advantageous in terms of cost.

<Conductive carbon material>

When the acryl-based monomer is modified with sulfur, a carbon material having conductivity may be added to the acryl-based monomer in advance. This is because that it can improve conductivity of the sulfur-based active material. As such a conductive carbon material, a carbon material having a graphite structure is preferable. As the carbon material, those having a condensed aromatic ring structure such as, for example, carbon black, acetylene black, ketjen black, graphite, a carbon nanotube (CNT), a carbon fiber (CF), graphene, fullerene, and the like can be used. One or more kinds of conductive carbon materials can be used.
Among them, acetylene black, carbon black, and ketjen black are preferable because they are inexpensive and excellent in dispersibility. Moreover, a small amount of a CNT, graphene, or the like may be used in combination with acetylene black, carbon black, or ketjen black. Such a combined system makes it possible to further improve cycle characteristics of the lithium-ion secondary battery without significantly increasing the cost. Besides, the combined amount of the CNT or graphene is preferably 8% by mass or more and 12% by mass or less of a total amount of the conductive carbon material.
A compounding amount of the conductive carbon material is preferably greater than 5 parts by mass, more preferably greater than 7 parts by mass, further preferably greater than 10 parts by mass, based on 100 parts by mass of the acryl-based monomer. When the compounding amount is greater than 5 parts by mass, there is a tendency to easily achieve the purpose of further improving charge and discharge capacity and cycle characteristics. On the other hand, the compounding amount is preferably less than 50 parts by mass, more preferably less than 45 parts by mass, further preferably less than 40 parts by mass. When it is less than 50 parts by mass, a proportion of a sulfur-containing structure in the sulfur-based active material does not relatively decrease, and there is a tendency to easily achieve the purpose of further improving charge and discharge capacity and cycle characteristics.

<Other materials>

When the acryl-based monomer is modified with sulfur, other materials commonly used in this field may be added to the acryl-based monomer in advance, if desired.

<Production of sulfur-based active material>

In the present invention, the sulfur-based active material can be produced by baking a mixture comprising a predetermined acryl-based monomer and sulfur.

(Preparation of raw material)

A raw material for baking includes an acryl-based monomer and sulfur. It is preferable that the acryl-based monomer and sulfur are sufficiently mixed in advance. When additives such as a conductive carbon material and the like are added to the acryl-based monomer in advance, these additives are also mixed together. The mixing can be performed by a conventional method, for example, using a high-speed blender or the like. Moreover, the raw material for baking can also be formed into a pellet.

(Non-oxidizing atmosphere)

The baking is preferably performed under a non-oxidizing atmosphere. The non-oxidizing atmosphere refers to an atmosphere that does not substantially contain oxygen, and is adopted to suppress oxidative deterioration and excessive pyrolysis of constituent components. Specifically, it refers to an inert gas atmosphere such as nitrogen, argon, and the like, a sulfur gas atmosphere, or the like. Thus, the denaturation is performed, for example, in a quartz tube under an inert gas atmosphere.

(Baking method)

Baking can be performed by a conventional method. For example, baking can be performed by heating raw materials (including an acryl-based monomer and sulfur, and if desired, additives) at a predetermined temperature rising rate until reaching a predetermined temperature, maintaining them at the predetermined temperature for a predetermined time, and then cooling them naturally.

[Temperature rising rate]

The temperature rising rate is preferably within a range of, for example, 50°C/h or higher and 500°C/h or lower. The temperature rising rate is preferably higher than 100°C/h, more preferably higher than 150°C/h. On the other hand, the temperature rising rate is more preferably lower than 400°C/h, further preferably lower than 350°C/h. When the temperature rising rate is within such a range, there is a tendency to easily achieve the purpose of improving charge and discharge capacity and cycle characteristics.

[Baking temperature/time]

A baking temperature refers to a temperature after completion of the temperature rising of the raw materials, the temperature being maintained for a certain period of time for baking the raw materials. The temperature is preferably in a range of higher than 250°C and lower than 500°C. When it is higher than 250°C, there is a tendency to avoid insufficient sulfurization reaction and prevent a decrease in charge and discharge capacity of the object. On the other hand, when it is lower than 500°C, there is a tendency that decomposition of the raw materials can be prevented and a decrease in yield and a decrease in charge and discharge capacity can be prevented. The temperature is more preferably higher than 270°C, further preferably 300°C or higher. On the other hand, the temperature is more preferably lower than 450°C, further preferably lower than 400°C, further preferably 380°C or lower. A time for maintaining the temperature may be appropriately set according to types of raw materials, a baking temperature, etc., but is preferably 1 hour or more and 6 hours or less, for example. When it is 1 hour or more, there is a tendency that the baking can be sufficiently advanced, and when it is 6 hours or less, there is a tendency that excessive pyrolysis of the constituent components can be prevented. The time is more preferably greater than 1.3 hours, further preferably greater than 1.5 hours. On the other hand, the time is more preferably less than 4 hours, further preferably less than 3 hours.

[Device]

Baking can be performed by, for example, a muffle furnace (FIG. 1), or can be performed using a continuous device such as, for example, a twin-screw extruder and the like. When the continuous device is used, there is an advantage that the sulfur-based active material can be continuously produced through a series of operations such as also performing baking while kneading, pulverizing, and mixing the raw materials in the device, and the like.

The muffle furnace (FIG. 1) is a furnace partitioned by a hot plate or the like so that a heat source (heater) is not exposed inside the furnace in order to prevent contamination of a sample. In FIG. 1, the muffle furnace 1 has a heater 2 in the lower part of the furnace, the heater being partitioned by the hot plate. A lid 3 is installed on the front surface of the furnace (the left end side in the figure), which makes the furnace to have a structure in which the inside of the furnace can be held with an atmosphere of an inert gas 4. A thermocouple (not shown) is attached to the lid, so that a temperature inside the furnace during baking can be measured. Two tiers of stainless steel (SUS) rectangular parallelepiped trays 5 and 6 for baking raw materials are installed on the upper tier and the lower tier, inside the furnace.

The inside of the furnace is configured so that gas (for example, an inert gas such as an argon (Ar) gas and the like) can be continuously supplied in from and discharged out to the outside through a gas introduction tube 7 and a gas discharge tube 8. The gas discharge tube 8 is connected to a trap tank 10 accommodating a sodium hydroxide aqueous solution 9, and an exhaust gas to exit from the muffle furnace 1 through the gas discharge tube 8 to the outside once passes through the sodium hydroxide aqueous solution 9 in the trap tank 10 and then is released to the outside. Therefore, even if the exhaust gas contains a hydrogen sulfide gas generated by reaction, the hydrogen sulfide gas is neutralized with the sodium hydroxide aqueous solution and removed from the exhaust gas.

(Step of removing residue)

In a processed product obtained after baking, unreacted sulfur and the like which are precipitated from the sulfur sublimated during baking and then cooled remain behind. It is desirable to remove these residues as much as possible because they may cause deterioration of cycle characteristics. Removal of the residues can be performed according to a conventional method such as, for example, drying by heating under reduced pressure, drying with hot air, washing with a solvent, etc.

(Pulverization/classification)

The obtained sulfur-based active material can be pulverized to have a predetermined particle size and classified, in order to obtain a particle having a size suitable for producing an electrode. A preferred particle size distribution of the particle is about 1 μm or more and 40 μm or less in terms of median diameter, from the viewpoint of the effects of the present invention. The median diameter is preferably greater than 1 μm, more preferably greater than 2 μm, further preferably greater than 3 μm, further preferably greater than 4 μm, further preferably greater than 5 μm. Moreover, the median diameter is preferably less than 40 μm, more preferably less than 30 μm, further preferably less than 20 μm, further preferably less than 15 μm, further preferably less than 10 μm. Using a laser diffraction/scattering type particle size distribution analyzer (LA-960 manufactured by HORIBA, Ltd.), a median diameter can be calculated by measuring a volume basis cumulative 50% size (median diameter D50) using water as a dispersion medium.

Besides, in the baking method using the twin-screw extruder as described above, pulverization of the produced sulfur-based active material can be performed, at the same time as production of the sulfur-based active material, by shearing during kneading.

<Sulfur-based active material>

The sulfur-based active material thus obtained is composed mainly of carbon and sulfur, and when there is a large sulfur content, charge and discharge capacity and cycle characteristics tend to improve. Therefore, the larger the sulfur content is, the more preferable it is. In general, a preferred range of the sulfur content is 55.0% by mass or more, more preferably greater than 58.0% by mass, further preferably greater than 60.0% by mass, further preferably greater than 61.0% by mass, further preferably greater than 62.0% by mass, in the sulfur-based active material. However, when a conductive carbon material is compounded, the effects of improving charge and discharge capacity and cycle characteristics may be expected even if the sulfur content is slightly lower, due to an influence of carbon that constitutes the conductive carbon material. A sulfur content in such a case may be lower than the sulfur content as mentioned above by about 5.0% by mass.

<Lithium-ion secondary battery>

The sulfur-based active material of the present invention can be used as an electrode active material for a lithium-ion secondary battery, i.e., as a positive electrode active material or a negative electrode active material. That is, an electrode for a lithium secondary battery can be produced in the same manner as in a case of producing an electrode for a general lithium-ion secondary battery, except that the sulfur-based active material is used, further, a lithium-ion secondary battery can be produced in the same manner as in a case of producing a general lithium-ion secondary battery, except that the electrode for the lithium-ion secondary battery is used. The lithium-ion secondary battery thus produced has a large charge and discharge capacity and excellent cycle characteristics.

1. Using a sulfur-based active material as a positive electrode active material

The lithium-ion secondary battery of the present invention can be produced using a negative electrode and an electrolyte, and further, if desired, a member such as a separator and the like, in addition to a positive electrode comprising the above-described sulfur-based active material (positive electrode active material), according to a conventional method.

(Positive electrode)

The positive electrode for the lithium-ion secondary battery can be produced in the same manner as in a case for a general positive electrode for a lithium-ion secondary battery, except that the above-described sulfur-based active material is used as a positive electrode active material. For example, the positive electrode is produced by mixing the sulfur-based active material in a particulate state with a conductive aid, a binder, and a solvent to prepare a paste-like positive electrode material, applying the positive electrode material to a current collector, and then drying it. As another method, the positive electrode can also be produced by, for example, kneading the sulfur-based active material together with a conductive aid, a binder, and a small amount of solvent using a mortar or the like and forming them into a film, followed by crimping it to a current collector using a press machine or the like.

[Conductive aid]

Examples of the conductive aid include, for example, Vapor Grown Carbon Fiber (VGCF), carbon powder, carbon black (CB), acetylene black (AB), Ketjen black (KB), graphite, or a fine powder of metal that is stable at a positive electrode potential such as aluminum, titanium, and the like. One or two or more kinds of these conductive aids can be used.

[Binder]

Examples of the binder include polyvinylidene fluoride (PolyVinylidene DiFluoride: PVDF), polytetrafluoroethylene (PTFE), a styrenebutadiene rubber (SBR), polyimide (PI), polyamideimide (PAI), carboxymethylcellulose (CMC), polyvinyl chloride (PVC), an acryl-based monomer, a methacrylic resin (PMA), polyacrylonitrile (PAN), a modified polyphenylene oxide (PPO), polyethylene oxide (PEO), polyethylene (PE), polypropylene (PP), and the like. One or more kinds of these binders can be used.

[Solvent]

Examples of the solvent include N-methyl-2-pyrrolidone, N,N-dimethylformaldehyde, alcohol, hexane, water, and the like. One or more kinds of these solvents can be used.

[Compounding amount]

A compounding amount of these materials constituting the positive electrode is not particularly limited, but, for example, 2 parts by mass or more and 100 parts by mass or less of a conductive aid, 2 parts by mass or more and 50 parts by mass or less of a binder, and an appropriate amount of a solvent are preferably compounded based on 100 parts by mass of the sulfur-based active material.

[Current collector]

As the current collector, those generally used for a positive electrode for a lithium-ion secondary battery may be used. For example, examples of the current collector include one composed of an aluminum foil, an aluminum mesh, a punched aluminum sheet, an expanded aluminum sheet, a stainless steel foil, a stainless steel mesh, a punched stainless steel sheet, an expanded stainless steel sheet, a nickel foam, a nickel non-woven fabric, a copper foil, a copper mesh, a punched copper sheet, an expanded copper sheet, a titanium foil, a titanium mesh, a carbon non-woven fabric, a carbon woven fabric, or the like. Among them, a current collector composed of a carbon non-woven fabric or a carbon woven fabric made of carbon with a high degree of graphitization is appropriate as a current collector when the sulfur-based active material of the present invention is used as a positive electrode active material because the current collector does not contain hydrogen and has a low reactivity with sulfur. As a raw material for carbon fiber with a high degree of graphitization, various pitches (i.e., by-products of petroleum, coal, coal tar, and the like) used as materials for carbon fiber, a polyacrylonitrile fiber (PAN), and the like can be used. The current collector may be used alone, or two or more thereof may be used in combination.

(Negative electrode)

As the negative electrode material, a known metallic lithium, a carbon-based material such as graphite and the like, a silicon-based material such as a silicon thin film and the like, and an alloy-based material such as copper-tin, cobalt-tin, and the like can be used. When a lithium-free material, such as, for example, a carbon-based material, a silicon-based material, an alloy-based material, and the like, among the above-described negative electrode materials, is used as the negative electrode material, it is advantageous that a short circuit between the positive and negative electrodes due to generation of dendrites is unlikely to occur. However, when these lithium-free negative electrode materials are used in combination with the positive electrode of the present invention, neither the positive electrode nor the negative electrode contain lithium. For this reason, a lithium pre-doping process of inserting lithium into either or both of the negative electrode and the positive electrode in advance is required. As a method of pre-doping lithium, a known method may be followed. For example, when doping lithium into the negative electrode, there are a method of inserting lithium by an electrolytic doping method of assembling a half cell using metallic lithium as a counter electrode and electrochemically doping lithium and a method of inserting lithium by a pasting pre-doping method of attaching a metallic lithium foil to the electrode, then leaving it in an electrolyte, and doping it by utilizing diffusion of lithium into the electrode. Moreover, when pre-doping lithium into the positive electrode, the above-described electrolytic doping method can be used. As the lithium-free negative electrode materials, silicon-based materials that are negative electrode materials with a high capacity are particularly preferable, and among them, a thin-film silicon, which is thin in electrode thickness and thus is advantageous in terms of capacity per volume, is more preferable.

(Electrolyte)

As the electrolyte used for the lithium-ion secondary battery, those obtained by dissolving an alkali metal salt that is an electrolyte in an organic solvent can be used. As the organic solvent, it is preferable to use at least one selected from non-aqueous solvents such as ethylene carbonate, propylene carbonate, dimethyl carbonate, diethyl carbonate, ethyl methyl carbonate, dimethyl ether, $\gamma$-butyrolactone, acetonitrile, and the like. As the electrolyte, $LiPF_6$, $LiBF_4$, $LiAsF_6$, $LiCF_3SO_3$, LiI, $LiClO_4$, and the like can be used. A concentration of the electrolyte may be about 0.5 mol/L or more and 1.7 mol/L or less. Besides, the electrolyte is not limited to one in a liquid state. For example, when the lithium-ion secondary battery is a lithium polymer secondary battery, the electrolyte is in a solid state (for example, a polymer gel state).

(Separator)

The lithium-ion secondary battery may comprise a member such as a separator and the like, in addition to the negative electrode, positive electrode, and electrolyte as mentioned above. The separator is interposed between the positive electrode and the negative electrode, permits ion migration between the positive electrode and the negative electrode, and prevents an internal short circuit between the positive electrode and the negative electrode. If the lithium-ion secondary battery is of a sealed type, the separator is required to have a function of retaining the electrolyte. As the separator, it is preferable to use a thin and microporous or non-woven fabric film made of polyethylene, polypropylene, polyacrylonitrile, aramid, polyimide, cellulose, glass, or the like.

(Shape)

A shape of the lithium-ion secondary battery is not particularly limited, and various shapes such as a cylindrical shape, a stacked shape, a coin shape, a button shape, and the like can be used.

2. Using a sulfur-based active material as a negative electrode active material

The lithium-ion secondary battery of the present invention can be produced using a positive electrode and an electrolyte, and further, if desired, a member such as a separator and the like, in addition to a negative electrode comprising the above-described sulfur-based active material (negative electrode active material), according to a conventional method.

(Negative electrode)

The negative electrode for the lithium-ion secondary battery can be produced in the same manner as in a case for a general negative electrode for a lithium-ion secondary battery, except that the above-described sulfur-based active material is used as a negative electrode active material. For example, the negative electrode is produced by mixing the sulfur-based active material in a particulate state with a conductive aid, a binder, and a solvent to prepare a paste-like negative electrode material, applying the negative electrode material to a current collector, and then drying it. As another method, the negative electrode can also be produced by, for example, kneading the sulfur-based active material together with a conductive aid, a binder, and a small amount of solvent using the mortar or the like and forming them into a film, and then crimping it to a current collector using the press machine or the like.

As the conductive aid, binder, and solvent, the same ones as in the case of using the sulfur-based active material as the positive electrode active material can be used, and the same can also be applied to the current collector.

(Positive electrode)

The positive electrode material is not particularly limited as long as it is, for example, a transition metal oxide or solid solution oxide that contains lithium, or a substance capable of electrochemically absorbing and releasing lithium ions. Examples of the transition metal oxide that contain lithium include, for example, a Li-Co-based composite oxide such as $LiCoO_2$ and the like, a Li-Ni-Co-Mn-based composite oxide such as $LiNi_xCo_yMn_zO_2$ and the like, a Li-Ni-based composite oxide such as $LiNiO_2$ and the like, a Li-Mn-based composite oxide such as $LiMn_2O_4$ and the like, etc. Examples of the solid solution oxide include, for example, $Li_aMn_xCo_yNi_zO_2$ ($1.150 \leq a \leq 1.430$, $0.450 \leq x \leq 0.600$, $0.100 \leq y \leq 0.150$, $0.200 \leq z \leq 0.280$), $LiMn_xCo_yNi_zO_2$ ($0.300 \leq x \leq 0.850$, $0.100 \leq y \leq 0.300$, $0.100 \leq z \leq 0.300$), $LiMn_{1.5}Ni_{0.5}O_4$, and the like. These compounds may be used alone, or multiple kinds thereof may be mixed and used.

As for the electrolyte, the separator, and the shape of lithium-ion secondary battery, the same ones as in the case of using the sulfur-based active material as the positive electrode active material can be used.

EXAMPLES

Although the present invention will be described based on Examples, it is not limited to Examples.

Various chemicals used in Examples and Comparative examples are collectively shown below. Various chemicals were purified according to a conventional method as necessary.

<Materials used in tests>

Acryl-based monomer 1: Dodecyl methacrylate (manufactured by Tokyo Chemical Industry Co., Ltd., boiling point: 320°C)

Acryl-based monomer 2: Stearyl methacrylate (manufactured by Tokyo Chemical Industry Co., Ltd., boiling point: 380°C)

Acryl-based monomer 3: Ethylene glycol dimethacrylate (manufactured by Tokyo Chemical Industry Co., Ltd., boiling point: 235°C)

Acryl-based monomer 4: Methyl methacrylate (manufactured by Tokyo Chemical Industry Co., Ltd., boiling point: 101°C)

Acryl-based monomer 5: Hexyl methacrylate (manufactured by Tokyo Chemical Industry Co., Ltd., boiling point: 210°C)

Sulfur: Precipitated sulfur manufactured by Tsurumi Chemical Industry Co., Ltd.

Example 1

<Production of sulfur-based active material>

(Preparation of raw material)

According to the compounding in Table 1, materials were mixed in a blender to obtain a raw material for baking.

(Reaction device)

A muffle furnace (FIG. 1) was used to bake the raw material. The muffle furnace in FIG. 1 is as described above.

(Baking step)

First, an atmosphere in a muffle furnace was replaced with an Ar gas three times using a vacuum pump with the raw material being contained in a SUS container. Then, while continuously supplying the Ar gas at a flow rate of 100 mL/min from a gas introduction tube, heating of the muffle furnace was started 30 minutes after the start of supply. The temperature was increased at a temperature rising rate of 300°C/h, and when the temperature of the raw material reached 400°C, baking was performed for 2 hours while maintaining the temperature at 400°C. Next, while adjusting the flow rate of the Ar gas, the temperature of the baked material was naturally cooled to 25°C under an Ar gas atmosphere, and then the baked material was taken out from the muffle furnace.

(Removal of unreacted sulfur)

In order to remove unreacted sulfur (sulfur alone in a free state) remaining in the product after the baking step, the following step was performed. That is, the product was pulverized in a mortar, and the pulverized product was placed in a glass tube oven and heated at 250°C for 3 hours while being vacuum-sucked to obtain a sulfur-based active material in which unreacted sulfur was removed (or which comprises only a trace amount of unreacted sulfur). The temperature rising rate was set to 10°C/min.

(Pulverizing step)

The baked material from which the unreacted sulfur was removed was pulverized with a cutter mill (free speed mill, FS-20, manufactured by Labonect).

(Classification work)

In order to remove coarse particles from the baked material, the **baked material was classified using a 32 $\mu$m mesh stainless steel sieve to obtain** a sulfur-based active material.

<Production of lithium-ion secondary battery>

A lithium-ion secondary battery was produced as follows.

(Positive electrode)

The sulfur-based active material obtained above was used as an active material, acetylene black was used as a conductive aid, and the acryl-based monomer was used as a binder. They were weighed so that a proportion of the active material:conductive aid:binder becomes 85:10:5 (% by mass), put in a container, stirred and mixed with a planetary centrifugal mixer (ARE-250 manufactured by THINKY CORPORATION) using milliQ water for a dispersant to produce a uniform slurry. The slurry produced was applied onto a 20 $\mu$m aluminum foil using an applicator with a slit width of 60 $\mu$m, and compressed using a roll press to obtain an electrode, which was then heated at 120°C for 3 hours, dried, and then punched to $\varphi$11 to obtain an electrode (positive electrode). Then, a weight of the electrode was measured to calculate an amount of an active material in the electrode from the above-mentioned ratio.

(Negative electrode)

As the negative electrode, a metallic lithium foil (disk-shaped with a diameter of 14 mm and a thickness of 500 $\mu$m, manufactured by Honjo Metal Co., Ltd.) was used.

(Electrolyte)

As the electrolyte, a nonaqueous electrolyte in which $LiPF_6$ was dissolved in a mixed solvent of ethylene carbonate and diethyl carbonate was used. Ethylene carbonate and diethyl carbonate were mixed at a volume ratio of 1:1. A concentration of $LiPF_6$ in the electrolyte was 1.0 mol/L.

(Lithium-ion secondary battery)

A coin battery was produced using the above-described positive electrode, negative electrode, and electrolyte. In detail, in a dry room, a separator (Celgard 2400 manufactured by Celgard LLC, a polypropylene microporous membrane with a thickness of 25 μm) and a glass non-woven fabric filter (440 μm thickness, GA100 manufactured by ADVANTEC) were filled with electrolytes between the positive electrode and the negative electrode to form an electrode body battery. This electrode body battery was accommodated in a battery case made of stainless steel (member for CR2032 type coin battery, manufactured by Hohsen Corp.). The above-described electrolyte was injected into the battery case. The battery case was sealed with a caulking machine to obtain a lithium-ion secondary battery of Example 1.

Examples 2 and 3 and Comparative examples 1 to 4

Each raw material, sulfur-based active material, and lithium-ion secondary battery were produced in the same manner as in Example 1 except that appropriate changes were made according to the compoundings and conditions in Table 1.

However, in Comparative examples 1 and 2, the materials obtained by baking were almost unreacted sulfur, and therefore the materials almost disappeared in the step of removing the unreacted sulfur. This made it impossible to produce batteries, and subsequent evaluations could not be performed. For the other Examples and Comparative examples, batteries were produced, and the following evaluations were performed.

<Measurement of discharge capacity and capacity retention rate>

Each coin-type lithium-ion secondary battery produced in Examples and Comparative examples was charged and discharged at a current value corresponding to 50 mA (0.1 C) per 1 g of a positive electrode active material, under a condition of a test temperature at 30°C. A discharge termination voltage was set to 1.0V, and a charge termination voltage was set to 3.0V. While charging and discharging were repeated, first, second, and 10th battery discharge capacities (mAh) were observed.

The second discharge capacity (mAh/g) was defined as an initial capacity. The larger the initial capacity is, the larger the charge and discharge capacity of the lithium-ion secondary battery is, which can be evaluated to be preferable. Moreover, from the 10th discharge capacity $DC_{10}$ (mAh/g) and the second discharge capacity $DC_2$ (mAh/g), a capacity retention rate (%) was calculated by the following equation (a):

$$\text{Capacity retention rate (\%)} = (DC_{10}/DC_2) \times 100 \text{ (a)}$$

As described above, it can be said that the higher the capacity retention rate is, the more excellent the cycle characteristics of the lithium-ion secondary battery is.

<Mass ratio (%) of sulfur>

A mass ratio (%) of sulfur in the sulfur-based active material was determined by calculating a proportion of sulfur in a total mass of the sulfur-based active material from a mass of sulfur measured using a column (IonPac AS12A) manufactured by Dionex for an ion chromatograph device DX-320 manufactured by Dionex.

Table 1

| | Example | | | Comparative example | | | |
|---|---|---|---|---|---|---|---|
| | 1 | 2 | 3 | 1 | 2 | 3 | 4 |
| Sulfur-based active material | | | | | | | |
| Raw material | | | | | | | |
| Compounding (part by mass) | | | | | | | |
| Acryl-based monomer 1 | 100 | - | - | - | - | 100 | 100 |
| Acryl-based monomer 2 | - | 100 | - | - | - | - | - |
| Acryl-based monomer 3 | - | - | 100 | - | - | - | - |
| Acryl-based monomer 4 | - | - | - | 100 | - | - | - |

(continued)

|  | Example | | | Comparative example | | | |
|---|---|---|---|---|---|---|---|
|  | 1 | 2 | 3 | 1 | 2 | 3 | 4 |
| Acryl-based monomer 5 | - | - | - | - | 100 | - | - |
| Sulfur | 300 | 300 | 300 | 300 | 300 | 300 | 300 |
| Baking temperature (°C) | 400 | 400 | 400 | 400 | 400 | 200 | 600 |
| Baking time (h) | 2 | 2 | 2 | 2 | 2 | 2 | 2 |
| Availability for battery production | o | o | o | × | × | o | ○ |
| Sulfur content | 61.53 | 62.07 | 62.33 | - | - | 38.51 | 32.70 |
| Evaluation on battery | | | | | | | |
| Discharge capacity (mAh/g) | | | | | | | |
| First | 982.2 | 844.0 | 890.8 | - | - | 150.9 | 382.7 |
| Second | 725.5 | 632.1 | 655.2 | - | - | 100.1 | 208.1 |
| 10th | 659.5 | 589.5 | 577.1 | - | - | 91.2 | 167.5 |
| Capacity retention rate (%) | 90.1 | 93.3 | 88.1 | - | - | 91.1 | 80.5 |

<Embodiments>

**Preferred embodiments are shown below.**

[1] A sulfur-based active material obtained by baking a mixture comprising an acryl-based monomer and sulfur, wherein a boiling point of the acryl-based monomer is 230°C or higher, preferably higher than 230°C, more preferably higher than 235°C, further preferably higher than 250°C, further preferably higher than 270°C, further preferably higher than 300°C, further preferably higher than 320°C, further preferably higher than 350°C, or preferably 230°C or higher and lower than 400°C, more preferably higher than 230°C and lower than 395°C, further preferably 235°C or higher and lower than 390°C, further preferably higher than 250°C and lower than 385°C, further preferably higher than 270°C and lower than 380°C.

[2] The sulfur-based active material of [1] above, wherein the baking temperature is higher than 250°C and lower than 500°C, preferably higher than 270°C and lower than 450°C, more preferably 300°C or more and lower than 400°C, further preferably 300°C or more and 380°C or lower.

[3] The sulfur-based active material of [1] or [2] above, wherein the baking is performed under a non-oxidizing atmosphere.

[4] The sulfur-based active material of any one of [1] to [3] above, wherein the acryl-based monomer is at least one selected from the group consisting of an acrylate compound represented by the following formula (1) and a diacrylate compound represented by the following formula (2):

$$CH_2=C(R^{11})COOR^{12} \qquad (1)$$

(wherein, $R^{11}$ is a hydrogen atom or a methyl group, and $R^{12}$ is an alkyl group.)

$$CH_2=C(R^{21})COO\text{-}Y\text{-}OCO\ (R^{22})\ C=CH_2 \qquad (2)$$

(wherein $R^{21}$ and $R^{22}$ are the same or different and are each a hydrogen atom or a methyl group, Y is a linear hydrocarbylene group, which may have at least one substituent selected from the group consisting of a hydroxyl group and an alkyl group, and a carbon skeleton constituting the linear hydrocarbylene group may have an ether bond with an oxygen atom provided that when there are two or more of the ether bonds, any adjacent oxygen atoms always have two or more intervening carbon atoms between them.)

[5] The sulfur-based active material of any one of [1] to [4] above, wherein $R^{12}$ is an alkyl group having 12 to 30 carbon atoms, preferably 12 to 18 carbon atoms, Y is a linear hydrocarbylene group having 2 to 6 carbon atoms, preferably 2 or 3 carbon atoms, and in the linear hydrocarbylene group, the number of substituents is 1 to 4, preferably 1 or 2, the number of carbon atoms of the alkyl group that is a substituent is 1 to 4, preferably 1, and the number of ether bonds which the carbon skeleton constituting the linear hydrocarbylene group has is 1 to 2.

[6] The sulfur-based active material of any one of [1] to [5] above, wherein the acryl-based monomer is liquid.

[7] The sulfur-based active material of any one of [1] to [6] above, wherein a sulfur content in the sulfur-based active material is 55.0% by mass or more, preferably greater than 58.0% by mass, more preferably greater than 60.0% by mass, further preferably greater than 61.0% by mass, further preferably greater than 62.0% by mass.

[8] An electrode comprising the sulfur-based active material of any one of [1] to [7] above.

[9] A lithium-ion secondary battery comprising the electrode of [8] above.

[10] A method for producing a sulfur-based active material, the method comprising the steps of:

(1) preparing a raw material by mixing an acryl-based monomer and sulfur; and
(2) baking the raw material,

wherein a boiling point of the acryl-based monomer is 230°C or higher, preferably higher than 230°C, more preferably higher than 235°C, further preferably higher than 250°C, further preferably higher than 270°C, further preferably higher than 300°C, further preferably higher than 320°C, further preferably higher than 350°C, or preferably 230°C or higher and lower than 400°C, more preferably higher than 230°C and lower than 395°C, further preferably 235°C or higher and lower than 390°C, further preferably higher than 250°C and lower than 385°C, further preferably higher than 270°C and lower than 380°C.

[11] The method of [10] above, wherein the baking temperature is higher than 250°C and lower than 500°C, preferably higher than 270°C and lower than 450°C, more preferably 300°C or more and lower than 400°C, further preferably 300°C or more and 380°C or lower.

[12] The method of [10] or [11] above, wherein the baking is performed under a non-oxidizing atmosphere.

[13] The method of any one of [10] to [12] above, wherein the acryl-based monomer is at least one selected from the group consisting of an acrylate compound represented by the following formula (1) and a diacrylate compound represented by the following formula (2):

$$CH_2=C(R^{11})COOR^{12} \qquad (1)$$

(wherein, $R^{11}$ is a hydrogen atom or a methyl group, and $R^{12}$ is an alkyl group.)

$$CH_2=C(R^{21})COO\text{-Y-}OCO\,(R^{22})\,C=CH_2 \qquad (2)$$

(wherein $R^{21}$ and $R^{22}$ are the same or different and are each a hydrogen atom or a methyl group, Y is a linear hydrocarbylene group, which may have at least one substituent selected from the group consisting of a hydroxyl group and an alkyl group, and a carbon skeleton constituting the linear hydrocarbylene group may have an ether bond with an oxygen atom provided that when there are two or more of the ether bonds, any adjacent oxygen atoms always have two or more intervening carbon atoms between them.)

[14] The method of any one of [10] to [13] above, wherein $R^{12}$ is an alkyl group having 12 to 30 carbon atoms, preferably 12 to 18 carbon atoms, Y is a linear hydrocarbylene group having 2 to 6 carbon atoms, preferably 2 or 3 carbon atoms, and in the linear hydrocarbylene group, the number of substituents is 1 to 4, preferably 1 or 2, the number of carbon atoms of the alkyl group that is a substituent is 1 to 4, preferably 1, and the number of ether bonds which the carbon skeleton constituting the linear hydrocarbylene group has is 1 to 2.

[15] The method of any one of [10] to [14] above, wherein the acryl-based monomer is liquid.

[16] The method of any one of [10] to [15] above, wherein an amount of the sulfur based on the acryl-based monomer is 50 parts by mass or more and 1000 parts by mass or less, preferably greater than 100 parts by mass and less than 750 parts by mass, more preferably greater than 150 parts by mass and less than 500 parts by mass, further preferably greater than 200 parts by mass and less than 500 parts by mass, further preferably greater than 250 parts by mass and less than 500 parts by mass, based on 100 parts by mass of the acryl-based monomer.

[17] A method of producing an electrode, the method comprising, after producing a sulfur-based active material by the method of any one of [10] to [16] above, the step of:
(3) producing an electrode using the sulfur-based active material by a conventional method.

[18] A method of producing a lithium-ion secondary battery, the method comprising, after producing an electrode by the method of [17] above, the step of:
(4) producing a lithium-ion secondary battery using the electrode by a conventional method.

REFERENCE SIGNS LIST

1. Muffle furnace
2. Heater
3. Lid
4. Inert gas
5. Tray (upper tier)
6. Tray (lower tier)
7. Gas introduction tube
8. Gas discharge tube
9. Sodium hydroxide aqueous solution
10. Trap tank

## Claims

1. A sulfur-based active material obtained by baking a mixture comprising an acryl-based monomer and sulfur, wherein a boiling point of the acryl-based monomer is 230°C or higher.

2. The sulfur-based active material of claim 1, wherein the baking temperature is higher than 250°C and lower than 500°C.

3. The sulfur-based active material of claim 1 or 2, wherein the baking is performed under a non-oxidizing atmosphere.

4. The sulfur-based active material of any one of claims 1 to 3, wherein the acryl-based monomer is at least one selected from the group consisting of an acrylate compound represented by the following formula (1) and a diacrylate compound represented by the following formula (2):

$$CH_2=C(R^{11})COOR^{12} \qquad (1)$$

(wherein, $R^{11}$ is a hydrogen atom or a methyl group, and $R^{12}$ is an alkyl group.)

$$CH_2=C(R^{21})COO\text{-}Y\text{-}OCO\ (R^{22})\ C=CH_2 \qquad (2)$$

(wherein $R^{21}$ and $R^{22}$ are the same or different and are each a hydrogen atom or a methyl group, Y is a linear hydrocarbylene group, which may have at least one substituent selected from the group consisting of a hydroxyl group and an alkyl group, and a carbon skeleton constituting the linear hydrocarbylene group may have an ether bond with an oxygen atom provided that when there are two or more of the ether bonds, any adjacent oxygen atoms always have two or more intervening carbon atoms between them.)

5. The sulfur-based active material of any one of claims 1 to 4, wherein $R^{12}$ is an alkyl group having 12 to 30 carbon atoms, Y is a linear hydrocarbylene group having 2 to 6 carbon atoms, and in the linear hydrocarbylene group, the number of substituents is 1 to 4, the number of carbon atoms of the alkyl group that is a substituent is 1 to 4, and the number of ether bonds which the carbon skeleton constituting the linear hydrocarbylene group has is 1 to 2.

6. The sulfur-based active material of any one of claims 1 to 5, wherein the acryl-based monomer is liquid.

7. The sulfur-based active material of any one of claims 1 to 6, wherein a sulfur content in the sulfur-based active material is 55.0% by mass or more.

8. An electrode comprising the sulfur-based active material of any one of claims 1 to 7.

9. A lithium-ion secondary battery comprising the electrode of claim 8.

10. A method for producing a sulfur-based active material, the method comprising the steps of:

15

(1) preparing a raw material by mixing an acryl-based monomer and sulfur; and
(2) baking the raw material,

wherein a boiling point of the acryl-based monomer is 230°C or higher.

11. The method of claim 10, wherein the baking temperature is higher than 250°C and lower than 500°C.

12. The method of claim 10 or 11, wherein the baking is performed under a non-oxidizing atmosphere.

13. The method of any one of claims 10 to 12, wherein the acryl-based monomer is at least one selected from the group consisting of an acrylate compound represented by the following formula (1) and a diacrylate compound represented by the following formula (2):

$$CH_2=C(R^{11})COOR^{12} \qquad (1)$$

(wherein, $R^{11}$ is a hydrogen atom or a methyl group, and $R^{12}$ is an alkyl group.)

$$CH_2=C(R^{21})COO\text{-}Y\text{-}OCO\ (R^{22})\ C=CH_2 \qquad (2)$$

(wherein $R^{21}$ and $R^{22}$ are the same or different and are each a hydrogen atom or a methyl group, Y is a linear hydrocarbylene group, which may have at least one substituent selected from the group consisting of a hydroxyl group and an alkyl group, and a carbon skeleton constituting the linear hydrocarbylene group may have an ether bond with an oxygen atom provided that when there are two or more of the ether bonds, any adjacent oxygen atoms always have two or more intervening carbon atoms between them.)

14. The method of any one of claims 10 to 13, wherein $R^{12}$ is an alkyl group having 12 to 30 carbon atoms, Y is a linear hydrocarbylene group having 2 to 6 carbon atoms, and in the linear hydrocarbylene group, the number of substituents is 1 to 4, the number of carbon atoms of the alkyl group that is a substituent is 1 to 4, and the number of ether bonds which the carbon skeleton constituting the linear hydrocarbylene group has is 1 to 2.

15. The method of any one of claims 10 to 14, wherein the acryl-based monomer is liquid.

16. The method of any one of claims 10 to 15, wherein an amount of the sulfur based on the acryl-based monomer is 50 parts by mass or more and 1000 parts by mass or less based on 100 parts by mass of the acryl-based monomer.

17. A method of producing an electrode, the method comprising, after producing a sulfur-based active material by the method of any one of claims 10 to 16, the step of:
(3) producing an electrode using the sulfur-based active material by a conventional method.

18. A method of producing a lithium-ion secondary battery, the method comprising, after producing an electrode by the method of claim 17, the step of:
(4) producing a lithium-ion secondary battery using the electrode by a conventional method.

# FIG. 1

| INTERNATIONAL SEARCH REPORT | International application No. |
| | **PCT/JP2023/010989** |

**A. CLASSIFICATION OF SUBJECT MATTER**

*H01M 4/58*(2010.01)i; *H01M 4/36*(2006.01)i
FI: H01M4/58; H01M4/36 B

According to International Patent Classification (IPC) or to both national classification and IPC

**B. FIELDS SEARCHED**

Minimum documentation searched (classification system followed by classification symbols)

H01M4/58; H01M4/36

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-167144 A (SUMITOMO RUBBER IND., LTD.) 08 October 2020 (2020-10-08) | 1-18 |
| A | JP 2014-179179 A (NATIONAL INST. OF ADVANCED INDUSTRIAL & TECHNOLOGY) 25 September 2014 (2014-09-25) | 1-18 |
| A | JP 2021-174764 A (SUMITOMO RUBBER IND., LTD.) 01 November 2021 (2021-11-01) | 1-18 |
| A | JP 2021-190173 A (SUMITOMO RUBBER IND., LTD.) 13 December 2021 (2021-12-13) | 1-18 |
| A | JP 2022-517877 A (INDUSTRY-ACADEMIC COOPERATION FOUND. GYEONGSANG NATIONAL UNIVERSITY) 10 March 2022 (2022-03-10) | 1-18 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 May 2023** | **23 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/010989**

| Patent document cited in search report | | | Publication date (day/month/year) | Patent family member(s) | | | Publication date (day/month/year) |
|---|---|---|---|---|---|---|---|
| JP | 2020-167144 | A | 08 October 2020 | US | 2020/0313190 | A1 | |
| | | | | EP | 3716363 | A1 | |
| | | | | KR | 10-2020-0115052 | A | |
| | | | | CN | 111755687 | A | |
| JP | 2014-179179 | A | 25 September 2014 | (Family: none) | | | |
| JP | 2021-174764 | A | 01 November 2021 | US | 2021/0324115 | A1 | |
| | | | | EP | 3902045 | A2 | |
| | | | | CN | 113540451 | A | |
| | | | | KR | 10-2021-0130100 | A | |
| JP | 2021-190173 | A | 13 December 2021 | US | 2021/0367238 | A1 | |
| | | | | EP | 3916843 | A1 | |
| | | | | KR | 10-2021-0145654 | A | |
| | | | | CN | 113725407 | A | |
| JP | 2022-517877 | A | 10 March 2022 | US | 2022/0102705 | A1 | |
| | | | | WO | 2020/145504 | A1 | |
| | | | | KR | 10-2020-0085467 | A | |

Form PCT/ISA/210 (patent family annex) (January 2015)

19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010044437 A
- JP 2015092449 A